# EUROPÄISCHE PATENTANMELDUNG

(11) **EP 4 628 288 A1**
(43) Veröffentlichungstag der Anmeldung: **08.10.2025**
(21) Anmeldenummer: 24167994.3
(22) Anmeldetag: 02.04.2024
(51) Int. Cl.: B29C 70/44, B29C 70/48

(54) **VERFAHREN ZUM HERSTELLEN EINES WINDENERGIEANLAGEN-ROTORBLATTES**

(71) Anmelder: Wobben Properties GmbH, 26607 Aurich (DE)
(72) Erfinder: Bajen, Jörg, 26556 Utarp (DE)
(74) Vertreter: Eisenführ Speiser

(57) **Zusammenfassung**

Es wird ein Verfahren zum Herstellen eines Windenergieanlagen-Rotorblattes (200) vorgesehen. Das Verfahren weist folgende Schritte auf: Herstellen einer Holmgurteinheit (300) mit einem ersten und zweiten Ende und einer ersten und zweiten Seite, Herstellen einer Rotorblattschale (210) mit einer Längsrichtung (L), wobei die Holmgurteinheit (300) in eine Rotorblattform platziert wird und die Rotorblattschale (210) um bzw. an der Holmgurteinheit (300) platziert ist, Durchführen einer Vakuum-Matrixinfusion mit der Rotorblattschale (210) und der Holmgurteinheit (300). Das Herstellen der Holmgurteinheit weist ein Einlegen von mindestens zwei Keilen (310) an gegenüberliegenden Seiten einer Holmgurtform, ein Einlegen von Faserlagen (320a), insbesondere von Fasermatten, zumindest teilweise über die nach innen weisenden Enden der Keile (310), ein Durchführen einer Vakuum-Matrixinfusion mit den Keilen (310) und der Mehrzahl von Faserlagen (320a) und ein Aushärten der harzgetränkten Holmgurteinheit (300) auf.

## Beschreibung

Die vorliegende Erfindung betrifft ein Verfahren zum Herstellen eines Windenergieanlagen-Rotorblattes sowie ein Windenergieanlagen-Rotorblatt.

Zur Erhöhung der mechanischen Steifigkeit eines Windenergieanlagen-Rotorblattes werden Holmgurte vorgesehen, welche sich entlang der Länge des Rotorblattes erstrecken und in eine Rotorblattschalung eingearbeitet sind. Die Holmgurte dienen dazu, mechanische Belastungen, welche auf das Rotorblatt einwirken, abzuleiten. Holmgurte können vorab gefertigt und dann bei der Herstellung der Rotorblattschale integriert werden.

Insbesondere am Übergang zwischen Holmgurt und den jeweiligen Abschnitten der Rotorblattschale muss ein geeigneter Übergang vorgesehen sein.

Es ist eine Aufgabe der vorliegenden Erfindung, die oben beschriebenen Nachteile zumindest teilweise zu beheben. Es ist insbesondere eine Aufgabe der vorliegenden Erfindung, ein Verfahren zum Herstellen eines Windenergieanlagen-Rotorblattes vorzusehen, bei welchem ein geeigneter Übergang zwischen Holmgurt und Rotorblattschale ermöglicht wird.

Diese Aufgabe wird durch ein Verfahren zum Herstellen eines Windenergieanlagen-Rotorblattes nach Anspruch 1 gelöst.

Somit wird ein Verfahren zum Herstellen eines Windenergieanlagen-Rotorblattes vorgesehen. Eine Rotorblattschale mit einer Längsrichtung wird hergestellt. Eine Holmgurteinheit mit einem ersten und zweiten Ende und einer ersten und zweiten Seite wird unabhängig von der Rotorblattschale hergestellt. Die Rotorblattschale und die Holmgurteinheit können in eine Rotorblattform platziert werden. Anschließend kann eine Vakuum-Matrixinfusion durchgeführt werden. Optional kann die Rotorblattschale auch in der Rotorblattform hergestellt werden, nachdem die Holmgurteinheit in die Rotorblattform eingelegt ist. Das Herstellen der Holmgurteinheit erfolgt durch Einlegen von mindestens zwei Keilen an gegenüberliegenden Seiten einer Holmgurtform. Faserlagen wie beispielsweise Fasermatten werden zumindest teilweise über die nach innen weisenden Enden der Keile gelegt. Eine Vakuum-Matrixinfusion wird mit den Teilen und der Mehrzahl der Faserlagen durchgeführt und die imprägnierte Holmgurteinheit wird ausgehärtet.

Somit kann eine Holmgurteinheit hergestellt werden, welche einen aus einer Mehrzahl von Faserlagen bestehenden Holmgurt sowie zwei Keilen an den gegenüberliegenden Seiten der Holmgurteinheit aufweist. Die Holmgurteinheit kann vorab hergestellt und dann in die Rotorblattform platziert werden.

Gemäß einem Aspekt sind die mindestens zwei Keile an dem ersten und/oder zweiten Ende geschäftet ausgestaltet, so dass die Dicke des Keils sich zum Ende hin verringert.

Die Holmgurteinheit kann eine erste und zweite Seite sowie ein erstes und zweites Ende aufweisen. Die erste und zweite Seite ist jeweils gerade ausgestaltet, da die äußeren Enden der Keile an der ersten und zweiten Seite anliegen.

Gemäß einem Aspekt ist eine Dicke der Holmgurteinheit an die Dicke der Rotorblattschale an einem Ende, an welchem die erste oder zweite Seite der Holmgurteinheit anliegt, angepasst. Die Keile können mehrteilig ausgestaltet sein, was eine Vereinfachung der Produktion erlaubt.

Somit kann eine Holmgurteinheit vorgesehen werden, welche vorab herzustellen ist und welche einen geeigneten Übergang zu einem Abschnitt der Rotorblattschale aufweist. Das Ende der Rotorblattschale liegt dann an einer Seite der Holmgurteinheit an. Diese Seite der Holmgurteinheit wird durch ein äußeres Ende des Keils ausgebildet. Der Keil füllt somit denjenigen Abschnitt aus, welcher nicht durch die Rotorblattschale und die Schäftung des Holmgurtes mit Material belegt ist.

Die Holmgurteinheit kann sich entlang der Längsrichtung der Rotorblattschale erstrecken. Die Dicke der Holmgurteinheit kann sich entlang der Längsrichtung ändern. Insbesondere können mehrere Abschnitte mit unterschiedlichen Dicken vorgesehen sein. Insbesondere kann die Dicke der Holmgurteinheit entlang der Längsrichtung (von der Rotorblattwurzel zur Rotorblattspitze hin) abnehmen. Vorzugsweise ist zwischen zwei benachbarten Keilabschnitten mit unterschiedlicher Dichtung ein Abschnitt mit einer Schäftung vorgesehen. Besonders bevorzugt ist der Dickenverlauf der Holmgurteinheit angepasst an einen Dickenverlauf der Rotorblattschale entlang der Längsrichtung des Rotorblattes. Somit entspricht die Dicke der Holmgurteinheit der Dicke der Rotorblattschale entlang der Längsrichtung des Rotorblattes. Dies ist vorteilhaft, weil damit ein flächenplanarer Übergang der inneren Laminatschichten ohne Knicke, Faserirritationen und Störung des Kraftflusses der lasttragenden Faserstruktur zur Holmgurteinheit vorgesehen werden kann.

Die besondere Ausgestaltung der Holmgurteinheit ermöglicht kürzere Prozesszeiten, eine gleichbleibende Qualität und eine hohe Reproduzierbarkeit bei der Herstellung der Rotorblätter.

Mit der Holmgurteinheit kann ein optimaler Faserverlauf erreicht werden, mechanische Verluste können reduziert werden, eine hohe Qualität kann erreicht werden, verkürzte Prozesszeiten können erreicht werden, eine einfache Fertigung und eine Reduzierung von Fehlern kann erreicht werden.

Durch den flächenplanaren Übergang zwischen der Rotorblattschale und der Holmgurteinheit kann ein Übergang mit einer ausreichenden Steifigkeit erreicht werden.

Bei der Herstellung einer Rotorblattschale wird Fasermaterial (Glasfaser GFK oder Kohlenstoffaser CFM) ein einer Bettungsmasse bzw. einer Matrix eingebettet. Die Matrix kann als Füllstoff oder Klebestoff dienen. Die Matrix wird anschließend ausgehärtet. Die Matrix kann Epoxydharz, Polyesterharz etc. aufweisen. Optional kann eine Vakuuminfusion durchgeführt werden, um eine Infusion der Matrix zu erreichen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Schnittansicht eines Übergangs zwischen einer Rotorblattschalung und einer Holmgurteinheit,
- Fig. 3: zeigt eine schematische Schnittansicht eines Keils in Längsrichtung,
- Fig. 4A und 4B: zeigen jeweils schematische Darstellungen eines Keils,
- Fig. 5A bis 5C: zeigen jeweils eine schematische Darstellung eines Keils, und
- Fig. 6A: zeigen jeweils einen Querschnitt einer Holmgurteinheit entlang einer
- bis 6E: Längsachse.

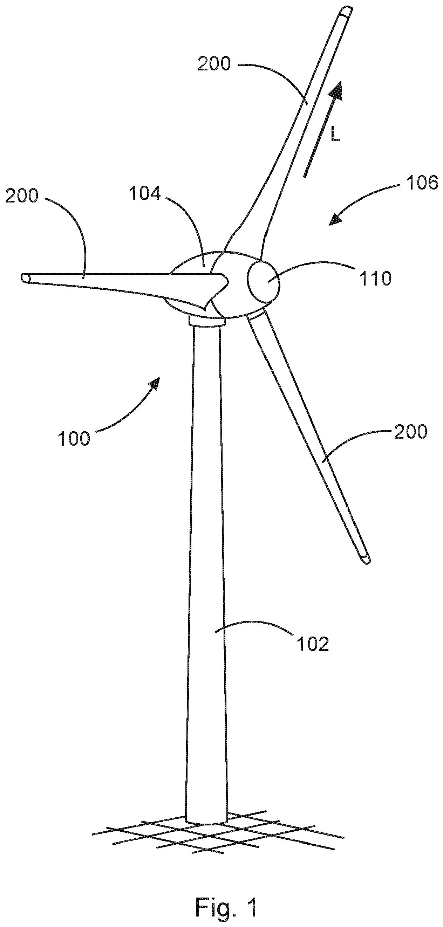

Fig. 1 zeigt eine schematische Darstellung einer Windenergieanlage. Die Windenergieanlage 100 weist einen Turm 102 mit einer Gondel 104 und einem aerodynamischen Rotor 106 auf. Der aerodynamische Rotor weist einen Spinner 110 sowie drei Rotorblätter 200 auf. Der Wind versetzt den aerodynamischen Rotor 106 in Bewegung bzw. in Rotation. Ein elektrischer Generator ist mit dem aerodynamischen Rotor direkt oder indirekt gekoppelt und erzeugt elektrische Energie bei Drehung des aerodynamischen Rotors.

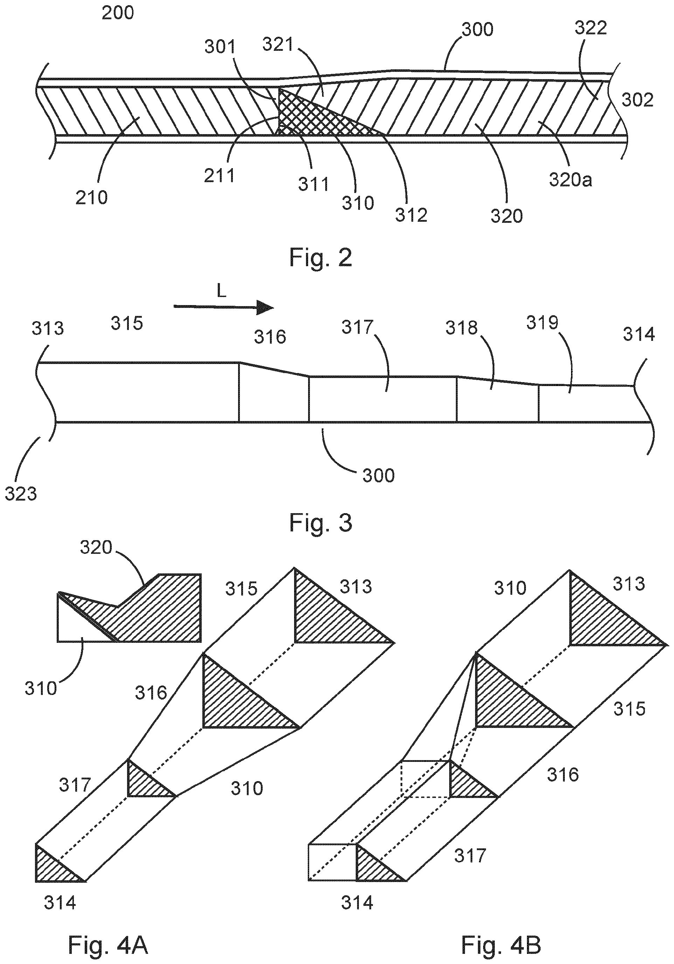

Fig. 2 zeigt eine schematische Schnittansicht eines Übergangs zwischen einer Rotorblattschale und einer Holmgurteinheit. In Fig. 2 ist insbesondere eine schematische Schnittansicht eines Rotorblattes 200 gezeigt. Das Rotorblatt 200 weist eine Rotorblattschale 210 mit einem Ende 211 auf. Neben der Rotorblattschale 210 ist eine Holmgurteinheit 300 mit mindestens einem Keil 310 und einem Holmgurt 320 vorgesehen. Der Keil 310 weist ein erstes Ende 311 und ein zweites Ende 312 auf. Das erste Ende 311 ist im Bereich des Endes 211 vorgesehen. Die Dicke des Keils verjüngt sich in dem Maße wie die Dicke des Holmgurtes zunimmt.

Die Holmgurteinheit 300 bestehend aus dem mindestens einen Keil 310 und dem Holmgurt 320 wird vorab gefertigt und kann zur Herstellung des Rotorblattes 200 in eine Rotorblattform eingelegt werden.

Fig. 3 zeigt eine schematische Schnittansicht einer Holmgurteinheit entlang einer Längsrichtung des Rotorblattes. Die Holmgurteinheit weist ein erstes und zweites Ende 313, 314 sowie mehrere Keilabschnitte 315, 316, 317, 318, 319 auf. Der erste, dritte und fünfte Keilabschnitt 315, 317, 319 weist eine im Wesentlichen konstante Dicke auf. Der zweite und vierte Keilabschnitt 316, 318 ist konisch ausgestaltet, so dass die Dicke dieses Keilabschnittes in Längsrichtung abnimmt. Der in Fig. 3 gezeigte Querschnitt der Holmgurteinheit 300 in Längsrichtung ist an einen Dickenverlauf der Rotorblattschale 210 angepasst. Mit anderen Worten, die Holmgurteinheit weist in den jeweiligen Keilabschnitten dieselbe Dicke auf wie die Rotorblattschale 210 an dieser Position.

Fig. 4A und 4B zeigen jeweils schematische Darstellungen eines Keils. In Fig. 4A und 4B sind zwei unterschiedliche schematische Darstellungen einer Keileinheit gezeigt. Die Keileinheit weist ein erstes und zweites Ende 313, 314 sowie zwei Keilabschnitte 315, 317 mit im Wesentlichen konstanter Dicke und dazwischen einen konischen Keilabschnitt 316 auf.

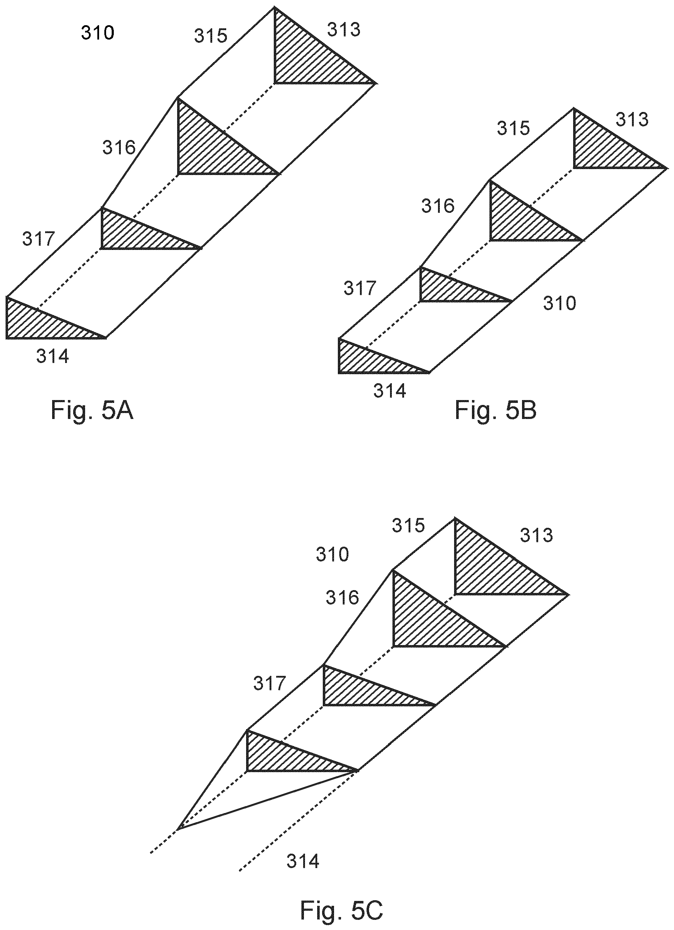

Fig. 5A bis 5C zeigen jeweils eine schematische Darstellung eines Keils. In den Fig. 5A bis 5C ist jeweils eine schematische Darstellung eines Keils gezeigt, wobei der Dickenverlauf des Keils sich in Längsrichtung ändert.

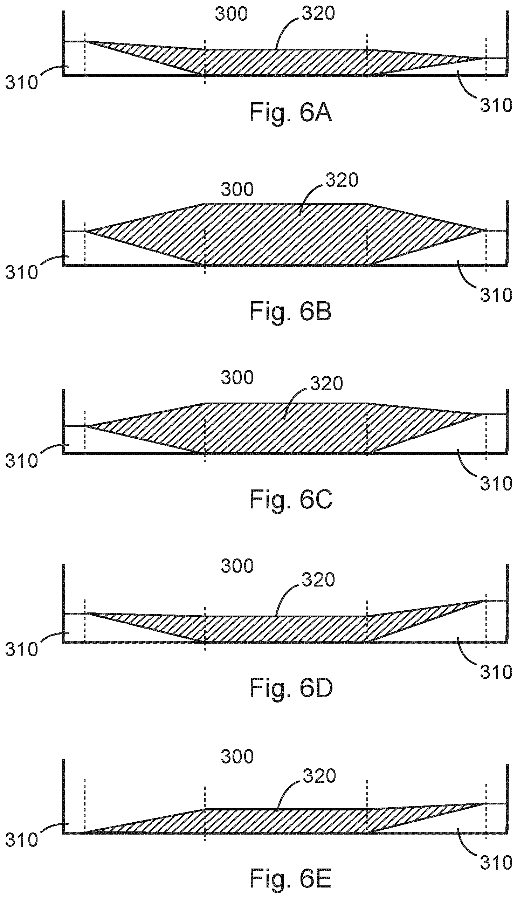

Fig. 6A bis 6E zeigen jeweils einen Querschnitt einer Holmgurteinheit entlang einer Längsachse L. In den Fig. 6A bis 6E ist jeweils ein Querschnitt bei einer unterschiedlichen Länge der Holmgurteinheit 300 gezeigt. Die Holmgurteinheit 300 weist zwei Keile 310 an der ersten und zweiten Seite der Holmgurteinheit 300 und einen Holmgurt 320 dazwischen auf.

### Bezugszeichenliste

- 100: Windenergieanlage
- 102: Turm
- 104: Gondel
- 106: Rotor
- 110: Spinner
- 200: Rotorblatt
- 210: Rotorblattschale
- 211: Ende der Rotorblattschale
- 300: Holmgurteinheit
- 310: Keil
- 311: erste Seite
- 312: zweite Seite
- 313: erstes Keilende
- 314: zweites Keilende
- 315: erster Keilabschnitt
- 316: zweiter Keilabschnitt
- 317: dritter Keilabschnitt
- 318: vierter Keilabschnitt
- 319: fünfter Keilabschnitt
- 320: Holmgurt
- 320a: Faserlagen
- 321: erste Holmgurtseite
- 322: zweite Holmgurtseite
- 323: erstes Holmgurtende
- 324: zweites Holmgurtende

## Patentansprüche

1. Verfahren zum Herstellen eines Windenergieanlagen-Rotorblattes (200), mit den Schritten:
- Herstellen einer Holmgurteinheit (300) mit einem ersten und zweiten Ende und einer ersten und zweiten Seite,
- Herstellen einer Rotorblattschale (210) mit einer Längsrichtung (L), wobei die Holmgurteinheit (300) in eine Rotorblattform platziert wird und die Rotorblattschale (210) um bzw. an der Holmgurteinheit (300) platziert ist,
- Durchführen einer Vakuum-Matrixinfusion mit der Rotorblattschale (210) und der Holmgurteinheit (300),
wobei das Herstellen der Holmgurteinheit Folgendes aufweist:
- Einlegen von mindestens zwei Keilen (310) an gegenüberliegenden Seiten einer Holmgurtform,
- Einlegen von Faserlagen (320a), insbesondere von Fasermatten, zumindest teilweise über die nach innen weisenden Enden der Keile (310),
- Durchführen einer Vakuum-Matrixinfusion mit den Keilen (310) und der Mehrzahl von Faserlagen (320a), und
- Aushärten der harzgetränkten Holmgurteinheit (300).

2. Verfahren nach Anspruch 1, wobei
die Keile (310) jeweils ein erstes und zweites Keilende (313, 314) aufweisen, wobei mindestens ein Keilende konisch ausgestaltet ist, so dass die Dicke des Keils sich zum Ende hin verringert.

3. Verfahren nach Anspruch 1 oder 2, wobei
die Holmgurteinheit (300) eine erste und zweite Seite (301, 302) und zwei Enden (303, 304) aufweist, wobei die erste und zweite Seite (301, 302) gerade ausgestaltet ist, da äußere Enden (311) der Keile (310) an den zwei Seiten (301, 302) anliegen.

4. Verfahren nach einem der vorherigen Ansprüche,
wobei die Dicke der Holmgurteinheit (300) entlang der Längsrichtung (L) an eine Dicke der Rotorblattschale angepasst ist.
